# EUROPEAN PATENT APPLICATION

(11) **EP 1 938 942 A1**
(43) Date of publication of application: **02.07.2008**
(21) Application number: 06821987.2
(22) Date of filing: 20.10.2006
(51) Int. Cl.: B29C 41/24, B29C 41/32, C08J 9/26, B29L 7/00, B29L 9/00

(54) **PROCESS FOR PRODUCTION OF THERMOPLASTIC RESIN MICROPOROUS MEMBRANES**

(30) Priority: 21.10.2005 JP 2005307579
(71) Applicant: Tonen Chemical Corporation, Tokyo 108-8005 (JP)
(72) Inventor: TAKITA, Kotaro, Nasushiobara-shi Tochigi 3292735 (JP); KONO, Koichi, Asaka-shi Saitama 3510025 (JP)
(74) Representative: Strehl Schübel-Hopf & Partner
(86) International application number: PCT/JP2006/320926
(87) International publication number: WO 2007/046496

(57) **Abstract**

A method for producing a microporous thermoplastic resin membrane from a thermoplastic resin and a membrane-forming solvent, using as part of a starting material film waste based on the thermoplastic resin and the membrane-forming solvent, which is generated in the production process of the microporous thermoplastic resin membrane, comprising the steps of melt-blending a virgin thermoplastic resin and a membrane-forming solvent in an extruder to prepare a virgin material solution, adding the film waste generated in the same or different production processes to the virgin material solution in a molten state in the extruder at an intermediate point, melt-blending them to prepare a thermoplastic resin solution, extruding the thermoplastic resin solution through a die, cooling the extrudate to form a gel-like sheet, and removing the membrane-forming solvent from the gel-like sheet.

## Description

### FIELD OF THE INVENTION

This invention relates to a method for producing a microporous thermoplastic resin membrane, particularly to a method for producing a microporous thermoplastic resin membrane using as a recycled material film waste generated by the trimming of a gel-like sheet in the process of producing the microporous thermoplastic resin membrane by a solvent method.

### BACKGROUND OF THE INVENTION

Microporous thermoplastic resin membranes are used for various applications such as battery separators. When the microporous thermoplastic resin membranes are produced by a solvent method, a melt blend of a thermoplastic resin and a membrane-forming solvent is usually extruded through a die, cooled to provide a gel-like sheet, and stretched, followed by the removal of the membrane-forming solvent. The stretched gel-like sheet is trimmed in both transverse edges to have a predetermined size with good appearance. Particularly when the gel-like sheet is stretched by a tenter method, both transverse edges of the gel-like sheet are gripped by clips, providing both transverse edges with too poor appearance to be used as final products. Accordingly, both transverse edges are trimmed.

To reduce the production cost of microporous thermoplastic resin membranes, film waste generated by trimming is preferably recycled. JP 2001-301009 A proposes a method for producing a synthetic resin film comprising the steps of extruding a thermoplastic resin in a film form from a die, taking off the film by a roll, trimming both transverse edges of the film, reeling up the film, pulverizing film waste generated by the trimming, and returning the film waste as a recycled material to an extruder, the speed of a screw in the extruder and the taking-off speed of the roll being controlled depending on the amount of the recycled material generated, such that a volume ratio of the virgin material to the recycled material charged into the extruder is constant. According to this method, a synthetic resin film with constant quality can be produced while suppressing variations in extrusion and thickness, despite the varying amount of film waste generated by trimming.

When edge waste of the gel-like sheet is charged into a hopper of an extruder simultaneously with the thermoplastic resin, however, insufficient blending occurs, resulting in a microporous membrane having poor appearance such as uneven color, uneven thickness, and an uneven pore distribution, which is a phenomenon that the membrane has a largely changing pore density from portion to portion, and a wide pore diameter distribution.

### OBJECT OF THE INVENTION

Accordingly, an object of this invention is to provide a method for producing a microporous thermoplastic resin membrane by a solvent method without suffering insufficient blending, while recycling film waste containing a thermoplastic resin and a membrane-forming solvent.

### DISCLOSURE OF THE INVENTION

As a result of intense research in view of the above object, the inventors have found that a microporous thermoplastic resin membrane can be produced by a solvent method without suffering insufficient blending while recycling film waste, by (a) melt-blending a virgin thermoplastic resin and a membrane-forming solvent in an extruder to prepare a virgin material solution, and adding film waste to the virgin material solution in the extruder at an intermediate point, or (b) simultaneously extruding a virgin material solution obtained by melt-blending a virgin thermoplastic resin and a membrane-forming solvent, and a recycled material solution obtained by melting a film waste through a die, and laminating the virgin material solution and the recycled material solution. This invention has been completed based on such finding.

Thus, the first method of this invention produces a microporous thermoplastic resin membrane from a thermoplastic resin and a membrane-forming solvent, using as part of a starting material film waste based on the thermoplastic resin and the membrane-forming solvent, which is generated in the production process of the microporous thermoplastic resin membrane, comprising the steps of melt-blending a virgin thermoplastic resin and a membrane-forming solvent in an extruder to prepare a virgin material solution, adding the film waste generated in the same or different production processes to the virgin material solution in a molten state in the extruder at an intermediate point, melt-blending them to prepare a thermoplastic resin solution, extruding the thermoplastic resin solution through a die, cooling the extrudate to form a gel-like sheet, and removing the membrane-forming solvent from the gel-like sheet.

In a preferred example of the first production method, the film waste generated in the same production process is cut-out margin generated by the trimming of the stretched gel-like sheet, and the cut-out margin is continuously recycled to the extruder.

The second method of this invention produces a microporous thermoplastic resin membrane from a thermoplastic resin and a membrane-forming solvent, using as part of a starting material film waste based on the thermoplastic resin and the membrane-forming solvent, which is generated in the production process of the microporous thermoplastic resin membrane, comprising the steps of melt-blending a virgin thermoplastic resin and a membrane-forming solvent to prepare a virgin material solution, melting the film waste generated in the same or different production processes to prepare a recycled material solution, simultaneously extruding the virgin material solution and the recycled material solution through a die, cooling the extrudate to form a gel-like laminate sheet, and removing the membrane-forming solvent from the gel-like laminate sheet.

In a preferred example of the second production method, the film waste generated in the same production process is cut-out margin generated by the trimming of the stretched gel-like laminate sheet, which is used to continuously prepare the recycled material solution.

### BRIEF DESCRIPTION OF THE DRAWINGS

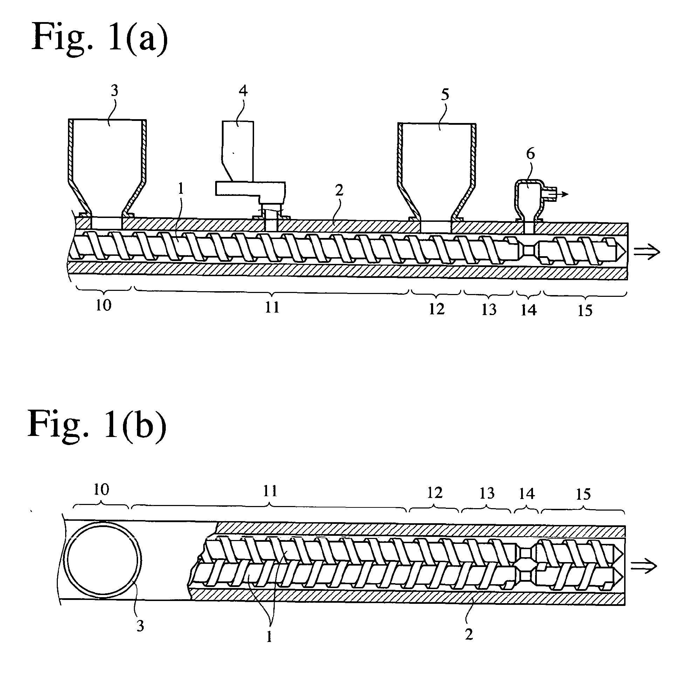

Fig. 1(a) is a partial cross-sectional view showing one example of extruders.

Fig. 1 (b) is a partially broken plan view showing the extruder of Fig. 1 (a).

### DESCRIPTION OF THE PREFERRED EMBODIMENTS

[1] Thermoplastic resin

The thermoplastic resins include polyolefins, polyesters, polyamides, polyarylene ethers and polyarylene sulfides, and the polyolefin is particularly preferable. The polyolefins can be homopolymers or copolymers of ethylene, propylene, butene-1, pentene-1, hexene-1, 4-methylpentene-1, octene, vinyl acetate, methyl methacrylate, styrene, etc.

The polyolefin is preferably a composition of ultra-high-molecular-weight polyethylene and polyethylene other than the ultra-high-molecular-weight polyethylene (polyethylene composition). The ultra-high-molecular-weight polyethylene has a mass-average molecular weight (Mw) of 5 x 10⁵ or more. The ultra-high-molecular-weight polyethylene can be not only an ethylene homopolymer, but also an ethylene-α-olefin copolymer containing a small amount of other α-olefin(s). The other α-olefins than ethylene are preferably propylene, butene-1, pentene-1, hexene-1, 4-methylpentene-1, octene-1, vinyl acetate, methyl methacrylate, and styrene. The Mw of the ultra-high-molecular-weight polyethylene is preferably 1x10⁶ to 15x10⁶, more preferably 1x10⁶ to 5 x10⁶.

The other polyethylene than the ultra-high-molecular-weight polyethylene has Mw of 1 x 10⁴ or more and less than 5x10⁵, preferably being at least one selected from the group consisting of high-density polyethylene, intermediate-density polyethylene, branched low-density polyethylene and linear low-density polyethylene, more preferably high-density polyethylene. The polyethylene having Mw of 1 x 10⁴ or more and less than 5 x 10⁵ can be not only an ethylene homopolymer, but also a copolymer containing a small amount of other α-olefin(s) such as propylene, butene-1, hexene-1, etc. Such copolymers are preferably produced using single-site catalysts.

The content of the ultra-high-molecular-weight polyethylene in the polyethylene composition is preferably 1% or more by mass, more preferably 10 to 80% by mass, based on 100% by mass of the entire polyethylene composition.

The polyolefin can be not only the above polyethylene composition, but also only the above ultra-high-molecular-weight polyethylene or only the other polyethylene than the ultra-high-molecular-weight polyethylene, if necessary.

The polyethylene composition can be a polyolefin composition comprising a polyolefin other than polyethylene (hereinafter referred to as "the other polyolefin" unless otherwise mentioned), if necessary. The other polyolefin can be at least one selected from the group consisting of polypropylene, polybutene-1, polypentene-1, polyhexene-1, polyoctene-1 and ethylene-α-olefin copolymers each having Mw of 1 x 10⁴ to 4 x 10⁶, and a polyethylene wax having Mw of 1 x 10³ to 1 x 10⁴. Polypropylene, polybutene-1, polypentene-1, polyhexene-1 and polyoctene-1 can not only be homopolymers, but also copolymers containing other α-olefin(s). The content of the other polyolefin is preferably 20% or less by mass, more preferably 10% or less by mass, based on 100% by mass of the polyolefin composition.

In any case, though not critical, the Mw of the polyolefin is preferably 1 x 10⁴ to 1 x 10⁷, more preferably 5 x 10⁴ to 15 x 10⁶, particularly 1 x 10⁵ to 5 x 10⁶. When the polyolefin has Mw of 15 x 10⁶ or less, melt extrusion can be conducted easily.

Though not critical, the molecular weight distribution [mass-average molecular weight / number-average molecular weight (Mw/Mn)] of the polyolefin is preferably 5 to 300, more preferably 10 to 100, when the polyolefin is the polyethylene composition, the ultra-high-molecular-weight polyethylene or the other polyethylene. When the Mw/Mn is less than 5, there are excessive high-molecular weight components, resulting in difficulty in melt extrusion. When the Mw/Mn is more than 300, there are excessive low-molecular weight components, resulting in a microporous membrane with decreased strength. Mw/Mn is a measure of the molecular weight distribution, the larger this value, the wider the molecular weight distribution. The Mw/Mn of the polyethylene (homopolymer or ethylene-α-olefin copolymer) can be properly controlled by multi-stage polymerization. The multi-stage polymerization method is preferably a two-stage polymerization method comprising forming a high-molecular-weight polymer component in the first stage and forming a low-molecular-weight polymer component in the second stage. In the case of the polyethylene composition, the larger the Mw/Mn is, the larger difference in Mw there is between the ultra-high-molecular-weight polyethylene and the other polyethylene, and vice versa. The Mw/Mn of the polyethylene composition can be properly controlled by the molecular weight and percentage of each component.

[2] Production of microporous thermoplastic resin membrane

(A) First production method

The first production method comprises the steps of (1) melt-blending a virgin thermoplastic resin and a membrane-forming solvent in an extruder to prepare a virgin material solution, (2) adding film waste to the virgin material solution in a molten state in the extruder at an intermediate point and melt-blending them, (3) extruding the resultant thermoplastic resin solution through a die, (4) cooling the resultant extrudate to provide a gel-like sheet, and (5) removing the membrane-forming solvent.

The film waste is usually cut-out margin obtained by trimming the stretched gel-like sheet. The film waste can be obtained in the same production process or a different production process. The film waste generated in the same production process is usually used as a recycled material. When the film waste generated in a different production process is recycled, the resin composition of the recycled material can be different from that of the virgin material to such an extent as not to deteriorate the desired properties of the microporous thermoplastic resin membrane.

When the film waste generated in the same production process is recycled, the first production method comprises, in addition to the steps (1) to (5), a step of stretching a gel-like sheet, and a step of trimming the stretched gel-like sheet. Taking for example a case where film waste generated in the same production process is recycled, the first production method will be described below.

(1) Preparation of virgin material solution

Figs. 1(a) and 1(b) show one example of double-screw extruders used in the first production method. This double-screw extruder comprises screws 1, 1, a cylinder 2 containing the screws 1, 1, a first hopper 3 for introducing a thermoplastic resin, a side feeder 4 for introducing a membrane-forming solvent, a second hopper 5 for introducing film waste, and a vent 6.

The above thermoplastic resin is introduced into the first hopper 3. The thermoplastic resin can be in the form of pellet or powder. The first hopper 3 is provided at an upper or lower position with a known apparatus for supplying thermoplastic resin pellets or powder at a constant rate depending on the shape of the thermoplastic resin. The membrane-forming solvent can be introduced into the first hopper 3 together with the thermoplastic resin, but it is preferably added to the thermoplastic resin in a molten state via the side feeder 4. The thermoplastic resin supplied from the first hopper 3 to the first feeding zone 10 of the screws 1, 1 is conveyed along the grooves of the screws 1, 1, gradually melted in a first blending zone 11, blended with the membrane-forming solvent supplied through the side feeder4 between the first hopper 3 and the second hopper 5, to prepare a virgin material solution in a molten state.

The virgin material solution can contain various additives such as filler, antioxidants, ultraviolet absorbers, anti-blocking agents, pigments, dyes, etc., if necessary, within ranges not deteriorating the effects of the present invention. Particularly to prevent the oxidation of the thermoplastic resin, the antioxidant is preferably added. Fine silica powder can be added as a pore-forming agent.

The membrane-forming solvent can be a liquid or solid solvent. The liquid solvents can be aliphatic or cyclic hydrocarbons such as nonane, decane, decalin, p-xylene, undecane, dodecane, liquid paraffin, etc., and mineral oil distillates having boiling points on the same levels. To obtain the gel-like sheet with a stable solvent content, a non-volatile liquid solvent such as liquid paraffin is preferably used. The solid solvents preferably having melting points of 80°C or lower include paraffin wax, ceryl alcohol, stearyl alcohol, dicyclohexyl phthalate, etc. The liquid solvent can be combined with the solid solvent.

The viscosity of the liquid solvent at 25°C is preferably 30 to 500 cSt, more preferably 30 to 200 cSt. When this viscosity is less than 30 cSt, the thermoplastic resin solution cannot uniformly be extruded through a die lip, resulting in difficulty in blending. When the viscosity exceeds 500 cSt, the liquid solvent cannot easily be removed.

The blending temperature is preferably in a range from Tm + 10°C to Tm + 100°C, wherein Tm is the melting point of the thermoplastic resin. When the thermoplastic resin is ultra-high-molecular-weight polyethylene, the other polyethylene than ultra-high-molecular-weight polyethylene, or a polyethylene composition, the blending temperature is preferably 140 to 250°C, more preferably 170 to 240°C.

The double-screw extruder can be a meshing-type, same-rotating-direction, double-screw extruder, a meshing-type, different-rotating-direction, double-screw extruder, a non-meshing-type, same-rotating-direction, double-screw extruder, or a non-meshing-type, different-rotating-direction, double-screw extruder. The meshing-type, same-rotating-direction, double-screw extruder is preferable because of a self-cleaning function and a higher rotation speed with smaller load than that of the different-rotating-direction, double-screw extruder.

A ratio L/D, wherein L is the length, and D is the diameter, of each screw 1, 1 in the double-screw extruder, is preferably 20 to 100, more preferably 35 to 70. When L/D is less than 20, sufficient melt-blending cannot be achieved. When L/D exceeds 100, the residing time of the thermoplastic resin solution is too long. The shape of each screw 1, 1 is not particularly restricted but can be a known one.

The concentration of the thermoplastic resin in the virgin material solution is 10 to 50% by mass, preferably 25 to 45% by mass, based on the total amount (100% by mass) of the thermoplastic resin and the membrane-forming solvent. When the percentage of the thermoplastic resin is less than 10% by mass, the productivity decreases undesirably, and large swelling and neck-in occur at a die exit when the thermoplastic resin solution is extruded, resulting in poor formability and self-supportability of an extrudate. When the percentage of the thermoplastic resin exceeds 50% by mass, the formability of the extrudate decreases.

When the thermoplastic resin is charged into the double-screw extruder, a ratio Q/Ns is preferably 0.1 to 0.55 kg/h/rpm, wherein Q is the amount (kg/h) of the thermoplastic resin charged, and Ns is the screw rotation speed (rpm). When Q/Ns is less than 0.1 kg/h/rpm, the thermoplastic resin is too sheared, so that the microporous membrane provides a battery separator with a low meltdown temperature, and poor resistance to breakage due to temperature elevation after shutdown. When Q/Ns is more than 0.55 kg/h/rpm, uniform blending cannot be achieved. The ratio Q/Ns is more preferably 0.2 to 0.5 kg/h/rpm. The screw rotation speed Ns is more preferably 250 rpm or more. Though not critical, the upper limit of the screw rotation speed Ns is preferably 500 rpm.

(2) Melt-blending with film waste

The film waste is added to the virgin material solution in a molten state through the second hopper 5 disposed above the second feeding zone 12 of the screws 1, 1, and melt-blended in the second blending zone 13 to prepare a thermoplastic resin solution. The blending temperature in the second blending zone 13 can be the same as in the first blending zone 11. As described above, the film waste is cut-out margin generated by the trimming of a gel-like sheet, which is obtained by cooling the thermoplastic resin solution extruded from a die. Accordingly, the film waste is based on the thermoplastic resin and the membrane-forming solvent. If the film waste were added to the virgin material solution not in a molten state, insufficient blending would occur, resulting in a microporous membrane with poor appearance (color unevenness, etc.), thickness unevenness and pore unevenness. The pore unevenness is, for instance, a phenomenon that the membrane has a largely changing pore density and a wide pore diameter distribution.

The amount of a recycled material (film waste) added is not particularly restrictive but can be properly determined by the amount of the film waste recovered. The mass ratio of the virgin material (thermoplastic resin + membrane-forming solvent) to the recycled material (film waste) is usually 90/10 to 50/50.

The film waste is preferably pulverized to fluff and recycled, so that the recycled material is easily blended with the virgin material solution. To feed a fluffy recycled material at a constant rate, for instance, the second hopper 5 is provided at a lower position with a known apparatus for feeding fluff at a constant rate, which can be a table feeder, a rotary valve, a screw feeder, etc.

(3) Extrusion

The thermoplastic resin solution obtained in the second blending zone 13 is conveyed to a venting zone 14 having deep grooves, from which volatile components are removed through a vent 6. The thermoplastic resin solution is sheared in an ejecting zone 15 and then extruded through a die. Because the extruding method is known, its descrption will be omitted. The extruding method can be the method described in Japanese Patent 2,132,327.

(4) Formation, stretching and trimming of gel-like sheet

The sheet extruded through a die is cooled to provide a gel-like sheet. Because the methods of forming and stretching the gel-like sheet are known, their descrption will be omitted. These methods are described in Japanese Patent 2,132,327.

The stretched gel-like sheet is trimmed. Particularly when the gel-like sheet is stretched by a tenter method, both transverse edges of the gel-like sheet are gripped by clips, so that both transverse edges with poor appearance cannot be used as final products. Accordingly, both transverse edges of the gel-like sheet are trimmed by a cutter, etc.

The film waste generated by trimming is preferably turned to fluff by a pulverizer, etc. The fluffy recycled material is supplied to the second hopper 5 through a pipe, for instance, by pressure or suction. With the pulverizer, the pipe and the second hopper 5 connected, the recycled material generated by trimming can be continuously supplied to the extruder to produce a microporous thermoplastic resin membrane.

(5) Removal of membrane-forming solvent

The membrane-forming solvent is removed (washed away) using a washing solvent. Because the washing solvents and the method of removing the membrane-forming solvents with the washing solvents are known, their descrption will be omitted. For instance, the methods described in Japanese Patent 2132327 and JP 2002-256099 A can be used.

(6) Drying of membrane

The microporous thermoplastic resin membrane obtained by removing the membrane-forming solvent is dried by a heat-drying method, an air-drying method, etc.

(7) Heat treatment

The dried membrane is preferably heat-treated. The heat treatment can be heat-setting and/or annealing, properly selectable depending on properties required for the microporous thermoplastic resin membrane. The heat-setting and annealing can be conducted, for instance, by using the method described in JP 2002-256099 A.

(8) Other steps

The dried membrane can be subjected to cross-linking with ionizing radiations, hydrophilization, etc., if necessary. Cross-linking and hydrophilization can be conducted, for instance, by using the methods described in JP 2002-256099 A.

(B) Second production method

The second production method comprises the steps of (1) (i) melt-blending a virgin thermoplastic resin and a membrane-forming solvent to prepare a virgin material solution, (ii) melting the film waste to prepare a recycled material solution, (2) simultaneously extruding the virgin material solution and the recycled material solution through a die, (3) cooling the resultant extrudate to provide a gel-like laminate sheet, and (4) removing the membrane-forming solvent from the gel-like laminate sheet.

The film waste can be generated in the same or different production process like in the first production method. When the film waste generated in the same production process is recycled, the second production method comprises a step of stretching the gel-like laminate sheet and a step of trimming the stretched gel-like laminate sheet in addition to the steps (1) to (4). Taking for example a case where the film waste generated in the same production process is recycled, the second production method will be described below.

(1) Preparation of virgin material solution and recycled material solution

In the second production method, the virgin material solution and the recycled material solution are separately prepared. These solutions are preferably prepared in separate extruders. The preparation of the virgin material solution can be conducted in the same manner as above.

An extruder for melting the recycled material solution is preferably a single-screw extruder. As described above, the film waste is preferably pulverized to fluff and then supplied to the extruder, to make the constant-rate feeding of the recycled material easy. To achieve the constant-rate feeding of the fluffy recycled material, the hopper is provided at its lower position with the above-described apparatus for feeding fluff at a constant rate, for instance. The melting temperature is preferably Tm + 10°C to Tm + 100°C, wherein Tm is the melting point of the thermoplastic resin in the recycled material.

(2) Extrusion

The melt-blended virgin material solution and the molten recycled material solution are simultaneously extruded from a die connected to each extruder. When both solutions are combined in a laminar manner in one die and then simultaneously extruded in a sheet form through the die (bonding inside the die), one die is connected to pluralities of extruders. When both solutions are extruded in a sheet form from separate dies and then laminated (bonding outside the die), each die is connected to each of plural extruders. The bonding inside the die is preferable.

In the simultaneous extrusion, any of a flat-die method and an inflation method can be used. To achieve the bonding inside the die in either method, a method of supplying each solution to each of manifolds connected to a multi-layer-forming die and laminating them in a laminar manner at a die lip (multi-manifold method), or a method of laminating the solutions in a laminar manner and then supplying the resultant laminate to a die (block method) can be used. Because the multi-manifold method and the block method per se are known, their detailed description will be omitted. A known multi-layer-forming, flat or inflation die can be used. The multi-layer-forming flat die preferably has a gap of 0.1 to 5 mm. When bonding is conducted outside the die by the flat die method, sheet-shaped solutions extruded through the dies are laminated under pressure between a pair of rolls. In any method described above, the die is heated at a temperature of 140 to 250°C during extrusion. The extrusion speed of the heated solution is preferably 0.2 to 15 m/minute. The ratio of the virgin material layer A to the recycled material layer B can be controlled by adjusting the amounts of the virgin material solution and the recycled material solution extruded.

(3) Formation, stretching and trimming of gel-like laminate sheet

The resultant extrudate is cooled to provide a gel-like laminate sheet. The extrudate-cooling method can be a known one described above. The stretching and the trimming can be the same as in the first method except that they are conducted on the gel-like laminate sheet. The film waste generated by trimming is pulverized to fluff in the same manner as in the first method, and supplied to the hopper of the extruder to prepare the recycled material solution. As described above, the recycled fluffy material can be conveyed through a pipe by pressure or suction. With the pulverizer, the pipe and the hopper connected, the recycled material is preferably continuously supplied to the extruder to produce the multi-layer, microporous membrane.

(4) Removal of membrane-forming solvent

The step of removing the membrane-forming solvent can be the same as in the first method except that this step is conducted on the gel-like laminate sheet.

(5) Other steps

In the second method, too, drying, heat treatment, cross-linking, hydrophilization, etc. can be conducted as described above.

(6) Laminate structure

The multi-layer, microporous membrane produced by the second method is not particularly restrictive in the number of layers. Combinations of the virgin material layer A and the recycled material layer B are not also particularly restrictive. Examples of the combination of layers include A/B, A/B/A, B/A/B, etc. Because the amount of the recycled material is smaller than that of the virgin material, a three-layer, structure of A/B/A is usually used.

This invention will be described in more detail with reference to Examples below without intention of restricting the scope of the present invention.

Example 1

A microporous polyethylene membrane was produced while recycling cut-out margin generated in the same production process (cut-out margin of a gel-like sheet).

(1) Preparation of virgin material solution

Dry-blended were 100 parts by mass of a polyethylene (PE) composition comprising 20% by mass of ultra-high-molecular-weight polyethylene (UHMWPE) having a mass-average molecular weight (Mw) of 2.0 x 10⁶ and Mw/Mn of 8, and 80% by mass of high-density polyethylene (HDPE) having Mw of 3.5 x 10⁵ and Mw/Mn of 13.5, with 0.2 parts by mass of tetrakis[methylene-3-(3,5-ditertiary-butyl-4-hydroxyphenyl)-propionate] methane. Measurement revealed that the PE composition of UHMWPE and HDPE had a melting point of 135°C and a crystal dispersion temperature of 100°C.

The Mw and Mw/Mn of UHMWPE and HDPE were measured by a gel permeation chromatography (GPC) method under the flowing conditions.
Measurement apparatus: GPC-150C available from Waters Corporation,
Column: Shodex UT806M available from Showa Denko K.K.,
Column temperature: 135°C,
Solvent (mobile phase): o-dichlorobenzene,
Solvent flow rate: 1.0 ml/minute,
Sample concentration: 0.1% by weight (dissolved at 135°C for 1 hour),
Injected amount: 500 µl,
Detector: Differential Refractometer (RI detector) available from Waters Corp., and
Calibration curve: Produced from a calibration curve of a single-dispersion,
standard polystyrene sample using a predetermined conversion constant.

30 parts by mass of the resultant mixture was charged into a strong-blending, double-screw extruder (L/D: 42) shown in Figs. 1(a) and 1(b) through its first hopper 3, and 70 parts by mass of liquid paraffin [35 cSt (40°C)] was supplied to this double-screw extruder via its side feeder4. Melt blending was conducted at 230°C and 250 rpm to prepare a virgin material solution at a speed of 50 kg/h.

(2) Addition of recycled material

Film waste generated by the downstream trimming step of a gel-like sheet was pulverized to fluff and supplied to the virgin material solution in a molten state at a speed of 10 kg/h via a second hopper 5, and melt-blended under the same conditions as above. Blending was conducted well.

(3) Formation of membrane

The resultant polyethylene solution was extruded to a thickness of 1.6 mm from a T die attached to a tip end of the extruder, and taken by a cooling roll controlled at 0°C to form a gel-like sheet. Using a tenter, the gel-like sheet was simultaneously and biaxially stretched to 5-fold in both longitudinal direction (MD) and transverse direction (TD) at 114°C. The stretched membrane was trimmed in both side edges, and the resultant waste film was turned to fluff by a pulverizer and continuously sent to the second hopper 5 of the extruder through a pipe under pressure. Fixed to an aluminum frame plate of 30 cm x 30 cm, the trimmed stretched membrane was immersed in a washing bath of methylene chloride controlled at 25°C, and washed with the vibration of 100 rpm for 3 minutes. The resultant membrane was air-dried at room temperature. Fixed to a tenter, the dried membrane was heat-set at 124.3°C for 30 seconds to produce a microporous polyethylene membrane.

Example 2

While recycling film waste (cut-out margin of the three-layer, gel-like sheet) generated in the same production process, a three-layer, microporous polyethylene membrane was produced.

(1) Preparation of virgin material solution A

Using a double-screw extruder, a virgin material solution A was prepared in the same manner as in Example 1.

(2) Preparation of recycled material solution B

Film waste generated by the downstream trimming step of a three-layer, gel-like sheet was pulverized to fluff, and supplied to a single-screw extruder through a hopper equipped with a kneader. Melt blending was conducted at 230°C and 250 rpm to prepare a recycled material solution B.

(3) Composition of membrane

The virgin material solution A and the recycled material solution B were supplied at speeds of 40 kg/h (solution A) and 10 kg/h (solution B), respectively from each extruder to a three-layer-forming T die, and extruded from the T die such that they were laminated in the order of solution A/solution B/solution A. The resultant extrudate was cooled while taking off by a cooling roll controlled at 0°C, to form a three-layer, gel-like sheet. Using a tenter, the three-layer, gel-like sheet was simultaneously and biaxially stretched to 5-fold in both MD and TD at 116°C. The stretched membrane was trimmed in both side edges, and the resultant film waste was turned to fluff by a pulverizer, and continuously sent to the single-screw extruder through a pipe under pressure. The trimmed and stretched three-layer, gel-like sheet was washed in the same manner as in Example 1. The resultant membrane was air-dried at room temperature, fixed to a tenter, and heat-set at 122°C to produce a multi-layer, microporous polyethylene membrane.

Comparative Example 1

Using a double-screw extruder comprising a second hopper for supplying a recycled material to a first blending zone, a microporous polyethylene membrane was produced in the same manner as in Example 1 except that a recycled material generated in another production process, which had the same polyethylene composition as in the virgin material, and a liquid paraffin content of 70% by mass was added at a supply speed of 10 kg/h to the above unmolten polyethylene composition (supply speed: 50 kg/h). However, insufficient blending occurred, resulting in unevenness in color, thickness and pore distribution in the microporous polyethylene membrane.

Comparative Example 2

The above polyethylene composition (supply speed: 50 kg/h), and a recycled fluffy material having the same polyethylene composition as in the virgin material and a liquid paraffin content of 70% by mass (supply speed: 10 kg/h), which was generated in another production process, were introduced into a kneader-equipped hopper of a single-screw extruder, and simultaneously supplied to a feeding zone of a screw, to carry out melt-blending at 230°C and 250 rpm. The resultant polyethylene solution was formed into a gel-like sheet in the same manner as in Example 1. Using a tenter, the gel-like sheet was simultaneously and biaxially stretched to 5-fold in both MD and TD at 114.4°C. The stretched membrane was washed in the same manner as in Example 1. The resultant membrane was air-dried at room temperature, fixed to a tenter, and heat-set at 124.3°C to produce a microporous polyethylene membrane. However, insufficient blending occurred, resulting in an uneven solution temperature and unstable extrusion.

The properties of the microporous polyethylene membranes obtained in Examples 1 and 2 were measured by the following methods. The results are shown in Table 1.

(1) Average thickness (µm)

The thickness of the microporous polyethylene membrane was measured at an arbitrary longitudinal position with a 5-mm interval over a length of 30 cm in a transverse direction (TD) by a contact thickness meter, and the measured thickness was averaged.

(2) Air permeability (seconds/100 cm³/20 µm)

The air permeability P₁ of the microporous polyethylene membrane having a thickness T₁ was measured according to JIS P8117, and converted to air permeability P₂ at a thickness of 20 µm by the formula of P₂ = (P₁ x 20)/T₁.

(3) Porosity (%)

It was measured by a mass method.

(4) pin puncture strength (mN/20 µm)

The maximum load was measured when a microporous polyethylene membrane having a thickness T₁ was pricked with a needle of 1 mm in diameter with a spherical end surface (radius R of curvature: 0.5 mm) at a speed of 2 mm/second. The measured maximum load L₁ was converted to the maximum load L₂ at a thickness of 20 µm by the formula of L₂ = (L₁ x 20)/T₁, which was regarded as pin puncture strength.

(5) tensile rupture strength and tensile rupture elongation

Measurement was conducted on a 10-mm-wide rectangular test piece according to ASTM D882.

(6) Heat shrinkage ratio (%)

The shrinkage ratio of a microporous polyethylene membrane after exposed to 105°C for 8 hours was measured three times in both longitudinal direction (MD) and transverse direction (TD) and averaged.

**Table 1**

| No. | | Example 1 | Example 2 | Comp. Ex. 1 | Comp. Ex. 2 |
|---|---|---|---|---|---|
| Resin Composition | | | | | |
| Virgin Material (Pellet) UHMWPE | Mw⁽¹⁾ | 2.0x10⁶ | 10⁶ 2.0x10⁶ | 10⁶ 2.0x10⁶ | 10⁶ 2.0x10⁶ |
| | Mw/Mn⁽²⁾ | 8 | 8 | 8 | 8 |
| | % by mass | 20 | 20 | 20 | 20 |
| HDPE | Mw⁽¹⁾ | 3.5x10⁵ | 3.5x10⁵ | 3.5x10⁵ | 3.5x10⁵ |
| | Mw/Mn⁽²⁾ | 13.5 | 13.5 | 13.5 | 13.5 |
| | % by mass | 80 | 80 | 80 | 80 |

| Recycled Fluffy Material | | | | | |
|---|---|---|---|---|---|
| UHMWPE | Mw⁽¹⁾ | 2.0x10⁶ | 2.0x10⁶ | 2.0x10⁶ | 2.0x10⁶ |
| | Mw/Mn⁽²⁾ | 8 | 8 | 8 | 8 |
| | % by mass | 6 | 6 | 6 | 6 |
| HDPE | Mw⁽¹⁾ | 3.5x10⁵ | 3.5x10⁵ | 3.5x10⁵ | 3.5x10⁵ |
| | Mw/Mn⁽²⁾ | 13.5 | 13.5 | 13.5 | 13.5 |
| | % by mass | 24 | 24 | 24 | 24 |
| Liquid Paraffin | % by mass | 70 | 70 | 70 | 70 |

| Blending/Extrusion Method | | | | | |
|---|---|---|---|---|---|
| Blending in the same extruder and extruding through die | | | | | |
| Virgin Material Solution⁽³⁾ | | | | | |
| Concentration (% by mass) | | 30 | - | 100⁽⁵⁾ | 100⁽⁵⁾ |
| Supply Speed (kg/h) | | 50 | - | 50 | 50 |
| State⁽⁴⁾ | | Molten | - | Unmolten | -⁽⁶⁾ |
| Supply Speed (kg/h) of Recycled Materia | | 10 | - | 10 | 10 |
| Blending State | | Good | - | Poor | Poor |
| Blending in another extruder and | | | | | |
| extruding through three-laver-forming die | | | | | |
| Virgin Material Solution A ⁽³⁾ | | | | | |
| Concentration | | **-** | 30 | **-** | **-** |
| Supply Speed (kg/h) | | **-** | 40 | **-** | **-** |
| Supply Speed (kg/h) of Recycled Material | | | | | |
| Solution B | | **-** | 10 | **-** | **-** |
| Layer Structure | | **-** | A/B/A | **-** | **-** |

| Membrane-Forming Conditions | | | | | |
|---|---|---|---|---|---|
| Stretching | | | | | |
| Temperature (°C) | | 114 | 116 | 114 | 114.4 |
| Magnification (MD x TD) | | 5x 5 | 5x 5 | 5x 5 | 5x 5 |
| Heat-Setting | | | | | |
| Temperature (°C) | | 124.3 | 122 | 124.3 | 124.3 |
| Properties | | | | | |
| Thickness (µm) | | 25 | 30 | - | - |
| Air Permeability (seconds/100 cm³/20 µm) | | 600 | 750 | - | - |
| Porosity (%) | | 38 | 40 | - | - |
| Pin Puncture Strength | | | | | |
| (g/20µm, mN/20 µm) | | 515/5,047 | 650/6,370 | -/- | -/- |

| Tensile Rupture Strength (kg/cm², kPa) | | | | | |
|---|---|---|---|---|---|
| | MD | 1,300/127,400 | 1,280/125,440 | -/- | -/- |
| | TD | 1,100/107,800 | 1,030/100,940 | -/- | -/- |
| Tensile Rupture Elongation (%) | MD/TD | 150/200 | 150/200 | -/- | -/- |
| Heat Shrinkage Ratio (%) | MD/TD | 6/4 | 7/5.2 | -/- | -/- |

Note: (1) Mw represents a mass-average molecular weight.

(2) Mw/Mn represents a molecular weight distribution.

(3) Liquid paraffin was used as a solvent.

(4) A virgin material solution immediately before adding the recycled material.

(5) A solvent was not contained.

(6) Introduced together with the recycled material into a kneader-equipped hopper of a single-screw extruder.

As is clear from Table 1, the microporous polyethylene membranes of Examples 1 and 2 had excellent permeability, mechanical properties, heat shrinkage resistance and thermal properties.

### EFFECT OF THE INVENTION

This invention can produce a microporous thermoplastic resin membrane by a solvent method while recycling film waste without suffering insufficient blending. The resultant microporous membrane is comparable to those produced only from the virgin material in various properties. This invention reduces the production cost of the microporous thermoplastic resin membrane. Reducing the amount of cut-out margins, this invention is amicable to environment.

## Claims

1. A method for producing a microporous thermoplastic resin membrane from a thermoplastic resin and a membrane-forming solvent, using as part of a starting material film waste based on the thermoplastic resin and the membrane-forming solvent, which is generated in the production process of the microporous thermoplastic resin membrane, comprising the steps of melt-blending a virgin thermoplastic resin and a membrane-forming solvent in an extruder to prepare a virgin material solution, adding the film waste generated in the same or different production processes to the virgin material solution in a molten state in the extruder at an intermediate point, melt-blending them to prepare a thermoplastic resin solution, extruding the thermoplastic resin solution through a die, cooling the extrudate to form a gel-like sheet, and removing the membrane-forming solvent from the gel-like sheet.

2. The method for producing a microporous thermoplastic resin membrane according to claim 1, wherein the film waste generated in the same production process is cut-out margin generated by the trimming of the stretched gel-like sheet, and wherein the cut-out margin is continuously recycled to the extruder.

3. A method for producing a microporous thermoplastic resin membrane from a thermoplastic resin and a membrane-forming solvent, using as part of a starting material film waste based on the thermoplastic resin and the membrane-forming solvent, which is generated in the production process of the microporous thermoplastic resin membrane, comprising the steps of melt-blending a virgin thermoplastic resin and a membrane-forming solvent to prepare a virgin material solution, melting the film waste generated in the same or different production processes to prepare a recycled material solution, simultaneously extruding the virgin material solution and the recycled material solution through a die, cooling the extrudate to form a gel-like laminate sheet, and removing the membrane-forming solvent from the gel-like laminate sheet.

4. The method for producing a microporous thermoplastic resin membrane according to claim 3, wherein the film waste generated in the same production process is cut-out margin generated by the trimming of the stretched gel-like laminate sheet, which is used to continuously prepare the recycled material solution.
